# FASCICULE DE BREVET EUROPEEN

(11) **EP 2 674 591 B1**
(45) Date de publication et mention de la délivrance du brevet: **07.06.2017**
(21) Numéro de dépôt: 13164709.1
(22) Date de dépôt: 22.04.2013
(51) Int. Cl.: F02C 6/06, F02C 9/26, F01D 17/06, F01D 17/08, F01D 17/16, F04C 28/28, B64D 41/00, F04D 27/02

(54) **Procédé et système de régulation de fourniture d'air comprimé à un réseau pneumatique, en particulier d'aéronef**
Verfahren und System zur Regulierung der Einspeisung von Druckluft in ein pneumatisches Netz, insbesondere eines Luftfahrzeugs
Method and system for controlling the supply of compressed air to a pneumatic network, in particular of an aircraft

(30) Priorité: 11.06.2012 FR 1255420
(43) Date de publication de la demande: 18.12.2013
(73) Titulaire: Safran Power Units, 31200 Toulouse (FR)
(72) Inventeur: Silet, Fabien, 31140 Pechbonnieu (FR); Chevalier, Stéphane, 31770 Colomiers (FR); Rideau, Jean-François, 31170 Tournefeuille (FR)
(74) Mandataire: Gevers & Orès

(56) Documents cités:
- EP-A2- 0 059 061
- WO-A2-01/23724
- US-A- 3 446 425
- US-A- 3 965 673
- US-A- 4 627 234
- US-A1- 2010 313 573

## Description

### DOMAINE TECHNIQUE

L'invention concerne un procédé de régulation de fourniture d'air comprimé à un réseau pneumatique en particulier pour le réseau d'un aéronef - notamment mais non exclusivement à partir d'un groupe auxiliaire de puissance, en abrégé APU (initiales de « auxiliary power unit » en terminologie anglaise) équipant en général l'aéronef - ainsi qu'un système de régulation pour sa mise en oeuvre.

L'invention s'applique aux aéronefs, c'est-à-dire aussi bien aux avions (avions commerciaux, régionaux, ou petit avion de type jet) qu'aux hélicoptères. L'invention peut utiliser un entraînement par le groupe APU équipant l'aéronef, mais également un moteur à piston, ou un moteur électrique.

Les aéronefs sont équipés d'une motorisation comprenant des moteurs principaux - dédiés à la propulsion et, en régime de croisière, à la production d'énergie non propulsive d'équipements consommateurs d'énergie (pneumatique, mécanique, hydraulique, électricité, etc.) - ainsi que, en général, un groupe APU.

Un groupe APU est un petit turbogénérateur ou moteur auxiliaire composé classiquement d'une entrée d'air, d'un générateur de gaz et d'une tuyère d'échappement. Le générateur de gaz est ensemble compresseur - chambre de combustion - turbine. La turbine, alimentée par les gaz de combustion sortants de la chambre - dans laquelle un mélange d'air comprimé et de carburant a été injecté - entraîne le compresseur et transmet de la puissance mécanique à une boîte accessoire. Les équipements consommateurs d'énergie sont alimentés par la boîte accessoire via une pompe hydraulique, une pompe pneumatique ou un alternateur.

Le groupe APU fournit ainsi de l'énergie non propulsive au sol et éventuellement en vol, lorsque les moteurs principaux ne sont plus en mesure de fournir de l'énergie non propulsive : par exemple dans le cas où les conditions de vol deviennent difficiles ou pour des phases délicates (recherche, milieu hostile, etc.) dans le cadre de missions particulières, ou en cas de défaillance d'un ou plusieurs générateurs intégrés aux moteurs principaux.

Le besoin en puissance pneumatique étant en général élevé, un compresseur de charge est en général dédié à la fourniture de ce type de puissance. Ce compresseur de charge est entraîné mécaniquement par le générateur de gaz du groupe APU et génère la puissance pneumatique voulue.

### ÉTAT DE LA TECHNIQUE

L'énergie pneumatique consommée par le réseau aéronef est variable et doit être adaptée aux variations de débits, tout en garantissant une pression minimale dans le réseau. De plus, en général, le groupe APU ne fournit cette puissance pneumatique qu'au sol. La puissance consommée par le compresseur de charge en vol doit être réduite puisque la puissance pneumatique n'est alors pas consommée.

Afin de gérer les variations de débit d'air comprimé consommé par le réseau, le compresseur de charge est équipé de vannes de guidage interne ou IGV, initiales de « Inlet Guide Valve » en terminologie anglaise. L'ouverture de ces vannes IGV est pilotée en entrée du compresseur afin de faire varier la capacité de variation de débit d'air.

Ces vannes IGV n'ayant pas un degré de réactivité suffisamment élevé, une vanne anti-pompage est en général prévue pour pouvoir palier aux variations brutales des débits d'air prélevés et éviter ainsi les reflux d'air. Cette vanne anti-pompage est extrêmement réactive, de l'ordre de 100 à 200 millisecondes. Par ailleurs, en vol, lorsque la génération d'air n'est pas utilisée, le couple résistif du compresseur de charge est réduit au maximum par fermeture des vannes IGV et la vanne anti-pompage est ouverte au maximum.

Cependant, cette solution de gestion des variations de débit d'air nécessite un surdimensionnement du compresseur de charge. En effet, la fermeture des vannes IGV génère de fortes pertes de charge. De ce fait, afin de maintenir une pression suffisante - en particulier lors de faibles prélèvements d'air - le compresseur est surdimensionné pour pouvoir gagner en termes de taux de compression au regard de sa capacité de génération d'air à l'état nominal. Du fait de ce surdimensionnement, le moteur n'est pas optimisé en masse et cela représente alors un handicap majeur sur les engins volants. EP0059061 montre un APU muni d'un système de contrôle du débit d'air fourni au réseau pneumatique par un compresseur de charge.

### EXPOSÉ DE L'INVENTION

L'invention vise à palier cet inconvénient majeur en basant la gestion des variations des débits d'air prélevé non pas sur un positionnement des vannes IGV mais par une éjection régulée du surplus d'air non consommé par le réseau.

Plus précisément, la présente invention a pour objet un procédé de régulation de la fourniture d'air comprimé à un réseau pneumatique, dans lequel, la fourniture étant assurée par un compresseur de charge, l'air comprimé est régulé en fonction des besoins instantanés du réseau pneumatique en évacuant tout l'air comprimé non consommé par ce réseau vers l'échappement des gaz via une ouverture variable asservie à la pression de l'air fourni au réseau pneumatique. Ainsi, le compresseur de charge est sollicité, à un point de vol donné, au même point de fonctionnement quel que soit le débit d'air demandé par le réseau pneumatique.

Ce procédé permet de ne pas surdimensionner le compresseur de charge qui reste alors dimensionné en termes de taux de compression au regard de sa capacité maximale de débit en régime nominal. Des gains significatifs en termes de puissance consommée par le compresseur de charge sont ainsi générés. De plus, le compresseur étant de plus petite dimension, sa masse est également réduite. Il en est de même des systèmes de rétention du compresseur (rouet, attache-couvercle, etc.). Avantageusement, l'énergie à contenir en cas d'éclatement du rouet est revue à la baisse.

Selon des modes de mise en oeuvre particuliers :
- une commande d'ouverture de l'air comprimé vers l'échappement des gaz est asservie à une pression de consigne donnée ;
- une commande de génération d'air du compresseur de charge selon l'une des deux positions d'ouverture/fermeture 0/1 est asservie à la position d'ouverture/fermeture 0/1 de l'entrée du réseau ; en particulier, des vannes IGV d'accès d'air au compresseur de charge sont régulées selon deux positions en fonction de la position d'ouverture/fermeture de la commande de génération d'air du compresseur de charge ; ainsi les vannes IVG n'ont pas besoin d'être régulées sur toute la plage de variation et le pilotage des IGV en est avantageusement simplifié.

L'invention se rapporte également à un système de régulation de fourniture d'air comprimé à un réseau pneumatique apte à mettre en oeuvre le procédé ci-dessus. Ce système comporte un compresseur de charge, une alimentation en air et un arbre de puissance apte à entraîner en rotation le compresseur de charge. Il comporte également, en sortie d'air comprimé de ce compresseur de charge, un canal de liaison relié, d'une part, à un canal de connexion au réseau pneumatique et, d'autre part, à un conduit d'évacuation d'air vers une tuyère d'échappement des gaz, ainsi que des vannes de prélèvement de débit d'air, commandées par une unité de traitement de données en fonction des mesures d'un capteur de pression disposé sur la connexion au réseau pneumatique, les vannes étant disposées sur l'alimentation d'air, sur la connexion au réseau pneumatique et sur le conduit d'évacuation.

Selon des modes de réalisation préférés :
- la vanne de prélèvement disposée sur le conduit d'évacuation est choisie entre une vanne de régulation proportionnelle dans une gamme déterminée autour d'une pression de consigne, une vanne anti-pompage et une soupape de décharge tarée à la pression de consigne ;
- les vannes de prélèvement disposées sur l'alimentation et sur la connexion au réseau pneumatique sont des vannes réglables sur deux positions d'états 0/1 d'ouverture/fermeture extrêmes ;
- les vannes disposées sur l'alimentation d'air du compresseur de charge sont des vannes IGV ;
- l'arbre d'entraînement en rotation du compresseur est un arbre de puissance mécanique choisi entre celui d'un générateur de gaz de groupe APU, d'un groupe moteur terrestre, par exemple de machine-outil, d'un moteur à piston et d'un moteur électrique ;
- la vitesse de l'arbre de puissance mécanique du groupe APU est régulée par un doseur de débit de carburant injecté dans une chambre de combustion du groupe APU, le débit étant ajusté en permanence de sorte que la vitesse dudit arbre mesurée par un capteur de vitesse corresponde à une valeur de consigne.

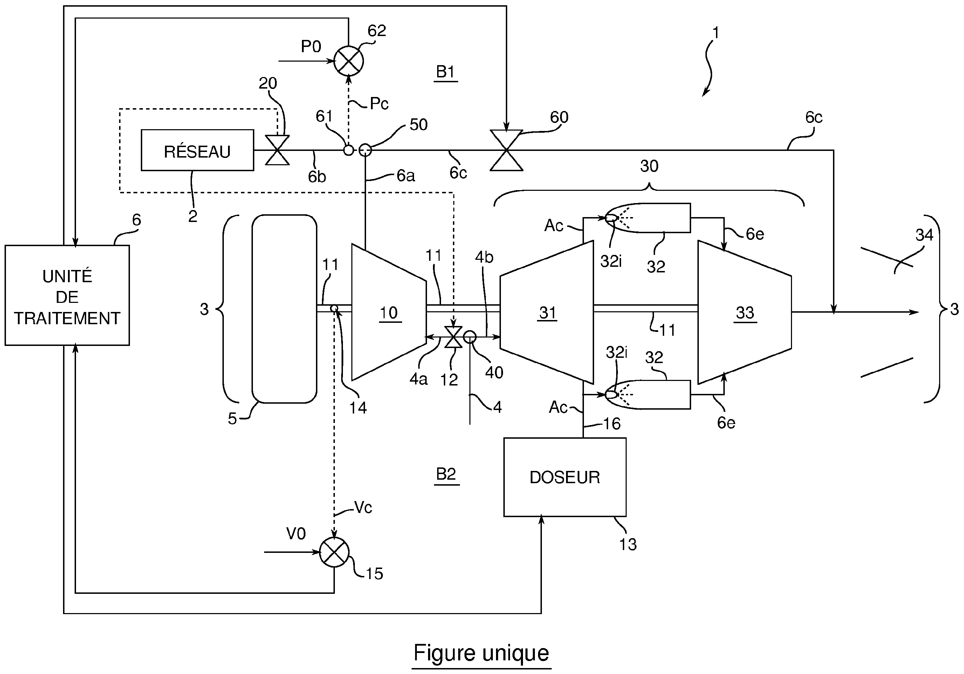

### BRÈVE DESCRIPTION DE LA FIGURE UNIQUE

D'autres aspects, caractéristiques et avantages de l'invention apparaîtront dans la description non limitative qui suit, relative à un exemple de réalisation particulier, en référence à la figure unique annexée.

Cette figure représente un exemple de schéma d'architecture de base pour un système de fourniture d'air comprimé à un réseau pneumatique d'aéronef, et régulé selon l'invention à partir d'un compresseur de charge entraîné par un arbre de puissance d'un groupe APU.

### DESCRIPTION DETAILLEE D'UN MODE DE REALISATION

En référence au schéma de la figure unique, l'exemple d'architecture de base pour un système 1 de fourniture d'air comprimé au réseau pneumatique 2 d'un aéronef comporte un compresseur de charge 10, entraîné par l'arbre de puissance 11 d'un groupe APU 3 d'un aéronef. Un groupe APU est sollicité au sol et parfois en vol pour la fourniture d'énergie non propulsive. En particulier, en phase de descente, de l'énergie pneumatique supplémentaire peut être nécessaire pour permettre un dégivrage efficace de l'avion ou pour délester les moteurs principaux des fonctions non propulsives.

Ce groupe APU 3 se compose essentiellement d'un générateur de gaz 30 - couplant un compresseur principal 31, une chambre de combustion 32 et une turbine de puissance 33 - et d'une tuyère 34 d'éjection des gaz en postcombustion.

Une alimentation en air 4 fournit de l'air au compresseur principal 31 et au compresseur de charge 10 via des vannes IGV 12. Pour ce faire, l'alimentation 4 se sépare respectivement en deux conduits 4a et 4b à travers un raccord en « T » 40. Le compresseur 31 alimente les injecteurs 32i de la chambre de combustion 32 en air comprimé Ac pré-mélangé au carburant. La combustion de ce mélange dans la chambre 32 alimente la turbine 33 en gaz 6e fortement énergétiques, entraînant alors en rotation l'arbre de puissance 11.

Cet arbre 11 entraîne à son tour le compresseur principal 31, le compresseur de charge 10 et une boîte accessoire 5. Cette boîte accessoire 5 relie l'arbre 11 par des trains d'engrenage à d'autres équipements consommateurs d'énergie : alternateurs, pompes hydrauliques ou moteurs annexes. Pour sa part, le compresseur de charge 10 alimente en air comprimé le réseau pneumatique 2 via un canal de liaison 6a.

Selon l'invention, le système 1 comporte des équipements de régulation de fourniture d'air en liaison avec l'architecture de base. Ainsi, en sortie d'air comprimé du compresseur de charge 10, le canal 6a est divisé pour être relié d'une part au réseau pneumatique 2 via un canal de connexion 6b et, d'autre part, à un conduit d'évacuation d'air 6c vers la tuyère d'échappement des gaz 34. Les liaisons entre canaux et conduit sont réalisées via un raccord en « T » 50.

Plus particulièrement, l'accès au réseau pneumatique 2 est commandé par une vanne 20 réglable sur deux positions d'états 0/1 d'ouverture/fermeture extrêmes lorsque le réseau 2 est demandeur d'air. L'état d'ouverture 0/1 de la vanne 20 règle également l'arrivée d'air dans le conduit 4a par un transfert de commande d'état 0/1 d'ouverture/fermeture d'une vanne 12.

L'évacuation d'air vers la tuyère 34 est réglée quant à elle par une vanne de régulation 60 d'ouverture variable en fonction du surplus d'air à évacuer.

La vanne de régulation 60 est ici une vanne d'ouverture proportionnelle réglée sur un différentiel établi par une boucle d'asservissement B1. La boucle B1 comporte un capteur de pression 61, disposé sur le canal de connexion 6b au réseau 2, et un comparateur 62 qui établit le différentiel de pression ΔP entre une valeur de pression de consigne P0 et la valeur de pression courante Pc mesurée par le capteur 61. A partir du différentiel ΔP, une commande de position de la vanne de régulation 60 est élaborée par une fonction de transfert d'une unité de traitement de données 6. Dans l'exemple illustré, cette unité est l'unité de commande numérique ou FADEC (initiale de « Full Authority Digital Electronic Controller » en terminologie anglaise) du groupe APU.

Par ailleurs, cette unité de traitement de données 6 pilote également la fonction de transfert de la commande de position 0/1 des vannes IGV 12 d'arrivée d'air dans le compresseur de charge 10. En particulier, ces vannes sont commandées en position 0/1 de sorte que leur fermeture complète, dès qu'aucun surplus d'air n'est demandé, permet d'éviter la création d'un couple résistif pénalisant.

De plus, cette unité de traitement de données 6 régule la rotation de l'arbre de puissance mécanique 11 du groupe APU 3 par le pilotage d'un doseur 13 de carburant 16. Le carburant 16 est pré-mélangé à l'air comprimé avant d'être injecté dans la chambre de combustion 32 du groupe APU 3 via les injecteurs 32i. Un asservissement est mis en oeuvre par une boucle B2 comportant un capteur de vitesse 14, disposé sur l'arbre de puissance 11, et un comparateur 15. Ce comparateur 15 établit le différentiel ΔV entre la vitesse courante Vc, mesurée par le capteur de vitesse 14, et une valeur de vitesse de consigne V0. A partir du différentiel ΔV, l'unité de traitement de données 6 élabore une commande de dosage au doseur de carburant 13 via en fonction de transfert appropriée.

L'invention n'est pas limitée aux exemples décrits et représentés.

Il est par exemple possible d'utiliser d'autres vannes de prélèvement que la vanne de régulation 60, en particulier la vanne anti-pompage ou une soupape de décharge tarée en fonction de la pression de consigne de la boucle B1.

Par ailleurs, l'arbre de puissance peut être entraîné par un générateur d'énergie mécanique autre qu'un groupe APU. Par exemple, dans des domaines autres que l'aéronautique, une turbine ou un groupe moteur terrestre de machine-outil, un moteur à piston ou un moteur électrique.

En outre, les vannes IGV peuvent être remplacées par un débrayage adapté de l'alimentation d'air.

## Revendications

1. Procédé de régulation de la fourniture d'air comprimé à un réseau pneumatique (2), dans lequel, la fourniture étant assurée par un compresseur de charge (10), l'air comprimé est régulé en fonction des besoins instantanés du réseau pneumatique (2) en évacuant tout l'air comprimé non consommé par ce réseau (2) vers l'échappement des gaz (34) via une ouverture variable (60) asservie à la pression de l'air fourni au réseau pneumatique (2), dans lequel le compresseur de charge (10) fonctionne au même point quel que soit le débit d'air demandé par le réseau pneumatique (2), et une commande de génération d'air (12) du compresseur de charge (10) selon l'une des deux positions d'ouverture/fermeture 0/1 est asservie à la position d'ouverture/fermeture 0/1 de l'entrée (20) du réseau (2).

2. Procédé de régulation selon la revendication précédente, dans lequel une commande d'ouverture de l'air comprimé vers l'échappement des gaz (34) est asservie (B1) à une pression de consigne donnée (P0).

3. Système de régulation de fourniture d'air comprimé (1) à un réseau pneumatique (2) apte à mettre en oeuvre le procédé selon la revendication 1 ou 2, ce système comportant un compresseur de charge (10), une alimentation en air (4) et un arbre de puissance (11) apte à entraîner en rotation le compresseur de charge (10), **caractérisé en ce qu'**il comporte également, en sortie d'air comprimé de ce compresseur de charge (10), un canal de liaison (6a) relié, d'une part, à un canal (6b) de connexion au réseau pneumatique (2) et, d'autre part, à un conduit d'évacuation d'air (6c) vers une tuyère d'échappement des gaz (34), ainsi que des vannes de prélèvement de débit d'air (12, 20, 60), commandées par une unité de traitement de données (6) en fonction des mesures d'un capteur de pression (61) disposé sur la connexion (6b) au réseau pneumatique (2), les vannes (12, 20, 60) étant disposées sur l'alimentation d'air (4), sur la connexion (6b) au réseau pneumatique (2) et sur le conduit d'évacuation (6c).

4. Système de régulation selon la revendication précédente, dans lequel la vanne de prélèvement (60) disposée sur le conduit d'évacuation (6c) est choisie entre une vanne de régulation proportionnelle dans une gamme déterminée autour d'une pression de consigne (P0), une vanne anti-pompage et une soupape de décharge tarée à la pression de consigne (P0).

5. Système de régulation selon la revendication 3, dans lequel les vannes de prélèvement (12, 20) disposées sur l'alimentation (4) et sur la connexion (6b) au réseau pneumatique (2) sont des vannes réglables sur deux positions d'états 0/1 d'ouverture/fermeture extrêmes.

6. Système de régulation selon l'une des revendications 3 ou 4, dans lequel les vannes (12) disposées sur l'alimentation d'air (4) du compresseur de charge (10) sont des vannes IGV.

7. Système de régulation selon l'une des revendications 3 à 6, dans lequel l'arbre d'entraînement en rotation du compresseur est un arbre de puissance mécanique (11) choisi entre celui d'un générateur de gaz de groupe APU (3), d'un groupe moteur terrestre, d'un moteur à piston et d'un moteur électrique.

8. Système de régulation selon la revendication précédente, dans lequel la vitesse de l'arbre de puissance mécanique (11) du groupe APU (3) est régulée par un doseur (13) de débit de carburant injecté dans une chambre de combustion (32) du groupe APU (3), le débit étant ajusté en permanence de sorte que la vitesse (Vc) dudit arbre (11) mesurée par un capteur de vitesse (14) corresponde à une valeur de consigne (V0).

## Patentansprüche

1. Verfahren zur Regelung der Zufuhr von Druckluft zu einem pneumatischen Netz (2), wobei die Zufuhr durch einen Lastkompressor (10) sichergestellt wird, wobei die Druckluft in Abhängigkeit der momentanen Bedürfnisse des pneumatische Netzes (2) geregelt wird, indem die gesamte nicht konsumierte Druckluft durch das pneumatische Netz (2) zu der Abgasleitung (34) über eine variable Öffnung (60) evakuiert wird, die auf den Druck der Luft geregelt wird, die zu dem pneumatischen Netz (2) zugeführt wird, in dem der Lastkompressor (10) an dem gleichen Punkt unabhängig von der Durchflussmenge von Luft arbeitet, die durch das pneumatische Netz (2) angefordert wird, und wobei eine Steuerung zur Lufterzeugung (12) des Lastkompressors (10) gemäß einer der zwei Positionen des Öffnens / Schließens 0/1 zu der Position des Öffnens / Schließens 0/1 des Einlasses (20) des Netzes (2) geregelt wird.

2. Verfahren zur Regelung nach dem vorhergehenden Anspruch, wobei eine Steuerung zur Öffnung der Druckluft zu der Abgasleitung (34) auf einen vorgegebenen Solldruck (P0) geregelt wird (B1).

3. System zur Regelung der Zufuhr von Druckluft (1) zu einem pneumatischen Netz (2), das geeignet ist, das Verfahren nach Anspruch 1 oder 2 durchzuführen, wobei das System einen Ladekompressor (10), eine Einspeisung von Luft (4) und eine Antriebswelle (11) umfasst, die geeignet ist, den Lastkompressor (10) in Rotation anzutreiben, **dadurch gekennzeichnet, dass** es außerdem am Auslass der Druckluft des Lastkompressors (10) einen Verbindungskanal (6a), der einerseits mit einer Leitung (6b) zur Verbindung mit dem pneumatischen System (2) und andererseits mit einer Leitung zur Luftevakuation (6c) an einer Düse zum Gasauslass (34) verbunden ist, sowie Ventile zur Entlüftung des Luftstroms (12, 20, 60) umfasst, die durch eine Einheit zur Datenverarbeitung (6) als Funktion der Messungen eines Drucksensors (61) gesteuert werden, der an der Verbindung (6b) mit dem pneumatischen Netz (2) angeordnet ist, wobei die Ventile (12, 20, 60) an der Einspeisung von Luft (4), an der Verbindung (6b) mit dem pneumatischen System (2) und an der Leitung zur Luftevakuation (6c) angeordnet sind.

4. Steuersystem nach dem vorhergehenden Anspruch, wobei das Ventil zur Entlüftung (60), das an der Leitung zur Luftevakuation (6c) angeordnet ist, aus einem Ventil zur proportionalen Regelung in einem bestimmten Bereich um einen Solldruck (P0), ein Pumpschutzventil und einem Überströmventil ausgewählt ist, das auf den Solldruck (P0) eingestellt ist.

5. Steuersystem nach Anspruch 3, wobei die Ventile zur Entlüftung (12, 20), die an der Zufuhr (4) und an der Verbindung (6b) mit dem pneumatischen Netz (2) angeordnet sind, Ventile sind, die auf zwei extreme Positionen der Zustände 0/1 des Öffnens / Schließens regelbar sind.

6. Steuersystem nach einem der Ansprüche 3 oder 4, wobei die Ventile (12), die an der Einspeisung von Luft (4) des Lastkompressors (10) angeordnet sind, IGV-Ventile sind.

7. Steuersystem nach einem der Ansprüche 3 bis 6, wobei die Welle zum Drehantrieb des Kompressors eine mechanische Antriebswelle (11) ist, die aus derjenigen eines Gasgenerators der APU-Gruppe (3), einer terrestrischen Motorgruppe, einem Kolbenmotor und einem Elektromotor ausgewählt ist.

8. Steuersystem nach dem vorhergehenden Anspruch, wobei die Geschwindigkeit der mechanischen Antriebswelle (11) der APU-Gruppe (3) durch einen Dosierer (13) der Durchflussmenge von Kraftstoff geregelt wird, der in eine Verbrennungskammer (32) der APU-Gruppe (3),eingespritzt wird, wobei die Durchflussmenge kontinuierlich angepasst wird, so dass die Geschwindigkeit (Vc) der Welle (11), die von einem Drehzahlsensor (14) gemessen wird, einem Sollwert (V0) entspricht.

## Claims

1. A controlling method for compressed air supply to a pneumatic network (2), wherein, the supply being provided by a load compressor (10), the compressed air is controlled as a function of the instantaneous needs of the pneumatic network (2) by discharging the whole compressed air being not consumed by such pneumatic network (2) towards the gas exhaust system (34) via a variable opening (60) depending on the air pressure supplied to the pneumatic network (2), wherein the load compressor (10) operates at the same point, whatever the air flow rate requested by the pneumatic network, and an air generation command (12) of the load compressor (10) according to one of the two opening/closing positions 0/1 is controlled by the opening/closing position 0/1 of the inlet (20) of the network (2).

2. The control method according to preceding claim, wherein a compressed air opening command towards the gas exhaust (34) is controlled (B1) at a given set point pressure (P0).

3. A controlling system (1) for compressed air supply to a pneumatic network (2) being able to implement the method according to claim 1 or 2, such system including a load compressor (10), an air supply (4) and a power shaft (11) being able to drive into rotation the load compressor (10), **characterized in that** it also comprises, in a compressed air outlet of such load compressor (10), a connecting channel (6a) connected, on the one side, with a channel (6b) being connected with the pneumatic network (2) and, on the other side, with an air discharge conduct (6c) towards a gas exhaust nozzle (34) as well as air flow rate bleed valves (12, 20, 60) controlled by a data processing unit (6) as a function of measurements made on a pressure sensor (61) arranged on the connection (6b) with the pneumatic network (2), the valves (12, 20, 60) being arranged on the air supply (4), on the connection (6b) with the pneumatic network (2) and on the discharge conduct (6c).

4. The controlling system according to preceding claim, wherein the bleed valve (60) arranged on the discharge conduct (6c) is selected amongst a proportional controlling valve in a predetermined range around a set point pressure (P0), an anti-surge valve and a discharge valve calibrated at the set point pressure (P0).

5. The controlling system according to claim 3, wherein the bleed valves (12, 20) arranged on the supply (4) and on the connection (6b) with the pneumatic network (2) are valves being settable on two positions of extreme opening/closing conditions 0/1.

6. The controlling system according to any of claims 3 or 4, wherein the valves (12) arranged on the air supply (4) of the load compressor (10) are IGV valves.

7. The controlling system according to any of claims 3 to 6, wherein the rotation driving shaft of the compressor is a mechanical power shaft (11) selected amongst this of an APU unit gas generator (3), of a terrestrial motive unit, for example a machine tool, a piston engine or an electrical engine.

8. The controlling system according to preceding claim, wherein the speed of the mechanical power shaft (11) of the APU unit (3) is controlled by a measuring device (13) for the fuel flow rate being injected into a combustion chamber (32) of the APU unit (3), the flow rate being permanently adjusted so that the speed (Vc) of said shaft (11) measured by a speed sensor (14) corresponds to a set point value (V0).
